# DEMANDE DE BREVET EUROPEEN

(11) **EP 1 365 350 A1**
(43) Date de publication de la demande: **26.11.2003**
(21) Numéro de dépôt: 03354041.0
(22) Date de dépôt: 13.05.2003
(51) Int. Cl.: G06K 9/46

(54) **Extraction de minuties d'une image d'empreinte digitale**

(30) Priorité: 13.05.2002 FR 0205847
(71) Demandeur: STMicroelectronics S.A., 92120 Montrouge (FR)
(72) Inventeur: Riff, Olivier, 67113 Blaesheim (FR); Martin, Lionel, 13100 Aix en Provence (FR)
(74) Mandataire: de Beaumont, Michel

(57) **Abrégé**

L'invention concerne un procédé et un système d'extraction d'une cartographie de minuties d'une image numérique consistant à : diviser (21) l'image en régions ; définir (22) une orientation de chaque région d'après la direction globale de sillons dans cette région ; et pour chaque région : filtrer (23) de façon unidirectionnelle la portion d'image selon une direction perpendiculaire à l'orientation de la région, repérer (24) les barycentres des sillons d'après l'intensité des résultats du filtrage, chaîner (25) les barycentres d'après la direction globale des sillons de la région, et interpréter (26) les résultats du chaînage pour déterminer la présence de minuties de type terminaison ou de type branche.

## Description

La présente invention concerne la reconnaissance d'empreintes digitales qui constitue une technique biométrique éprouvée pour l'identification d'individus. L'invention concerne plus particulièrement le traitement d'une image numérique représentant une empreinte digitale pour permettre sa comparaison ultérieure.

La reconnaissance d'empreintes digitales s'effectue par un examen de l'arrangement des lignes papillaires qui forment des points caractéristiques, nommés minuties. L'invention concerne le traitement d'une image numérique d'empreinte en vue d'en extraire les minuties.

De façon connue, l'analyse d'empreintes digitales se concentre sur deux types de minuties, notamment les minuties de type branche et de type terminaison qui, d'un point de vue statistique, sont les plus fréquentes.

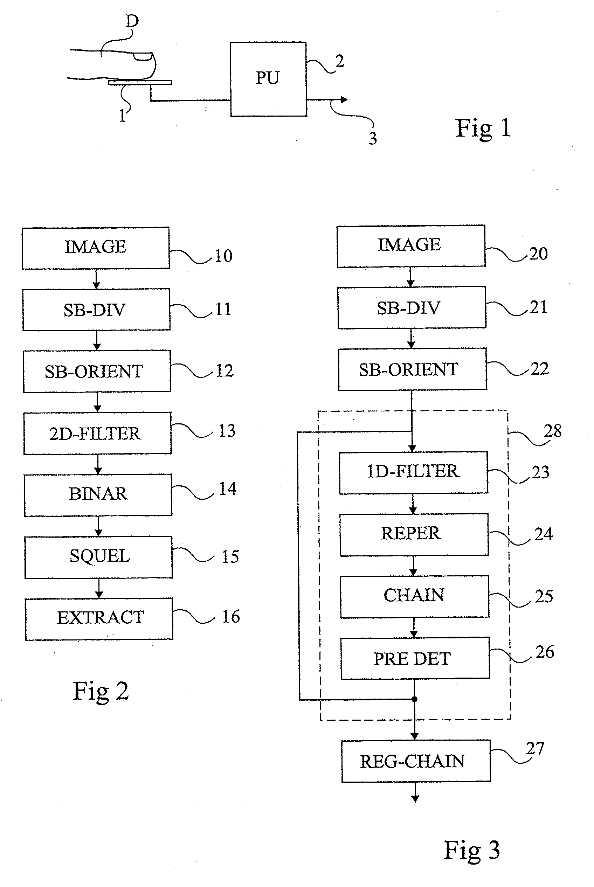

La figure 1 représente, de façon très schématique, un système automatique de reconnaissance d'empreintes digitales du type auquel s'applique la présente invention. Un tel système est essentiellement constitué d'un capteur 1 (constitué par exemple d'un dispositif optique de type numériseur) relié à une unité de traitement 2 (PU) chargée d'interpréter les résultats des mesures. L'unité de traitement 2 fournit, sur une liaison 3, un signal d'authentification ou de non-authentification d'un doigt D posé sur le capteur 1. L'unité de traitement 2 a généralement pour rôle de mettre en forme l'image numérique produite par le capteur 1 et d'analyser cette image pour la comparer à une ou plusieurs images contenues dans une base de données de référence.

La figure 2 illustre, sous forme de blocs, un exemple classique de procédé d'extraction de minuties d'une image numérique d'empreinte digitale. Le capteur 1 fournit une image numérique 10 (IMAGE) dans laquelle des sillons (monts et vallées) de l'arrangement papillaire sont représentés en niveaux de gris. L'unité de traitement effectue alors (bloc 11, SB-DIV) une subdivision de l'image en régions ou blocs d'image. On détermine ensuite (bloc 12, SB-ORIENT) l'orientation des blocs que l'on soumet à un filtrage pour lisser l'image (bloc 13, 2D-FILTER). Le recours à un filtrage orienté permet de réduire le temps de calcul par rapport à un filtrage global. Suite au filtrage, l'image (en fait, les différents blocs) est binarisée (bloc 14, BINAR), c'est-à-dire convertie de niveaux de gris en niveaux noir et blanc, par exemple, par seuillage, par calcul de variance ou de valeur moyenne. La binarisation a pour objet d'éviter les discontinuités éventuelles des sillons qui seraient liées à la prise d'image (différences de contraste, de luminosité, etc.). Enfin, l'image est squelettisée (bloc 15, SQUEL), c'est-à-dire que l'on amincit les traits représentant les sillons, pour éliminer les éventuels artefacts.

L'image finale obtenue (reconstituée entière) sert à la recherche des minuties proprement dite. Cette recherche (bloc 16, RECH) s'effectue en parcourant tout le squelette obtenu de l'image et en détectant la présence de branches ou de terminaisons. Généralement, on examine pour chaque pixel de l'image squelettisée, le niveau (noir ou blanc) des huit pixels qui l'entourent par rapport à son propre niveau. En fait, selon que la squelettisation donne une image en positif ou en négatif, on choisit d'examiner les pixels noirs ou les pixels blancs. Si un seul des huit pixels qui l'entourent est du même niveau que le pixel courant (central), on est en présence d'une terminaison dont les coordonnées du pixel courant représentent la position dans l'arrangement papillaire. Si exactement deux de ces huit pixels sont du même niveau que le pixel courant, les trois pixels font partie d'un même sillon. Si exactement trois pixels sont du même niveau que le pixel courant, le pixel courant représente vraisemblablement les coordonnées d'une minutie de type branche.

Comme un nombre relativement réduit de minuties (de 8 à 17) identiques entre deux empreintes suffit pour accepter la probabilité d'identité entre ces deux empreintes, on ne tient généralement pas compte des minuties qui sont trop proches les unes des autres et qui risquent de provenir d'imperfections dans la prise d'image ou dans les techniques de numérisation. En pratique, on détermine l'écart entre deux minuties le long d'un même sillon et on ne tient pas compte des minuties qui ne sont pas distantes d'au moins un nombre de pixels prédéterminé.

Les techniques décrites ci-dessus sont connues et couramment utilisées dans le traitement d'images. Par exemple, on pourra se référer à l'article "Fingerprint Image Enhancement: Algorithm and Performance Evaluation" de Lin Hong, Yifei Wan et Anil Jain, paru dans IEEE Transactions on Pattern Analysis and Machine Intelligence, Vol. 20, No 8, en août 1998.

Un inconvénient des techniques actuelles est qu'elles requièrent une mémorisation de l'image entière à chaque étape du traitement d'image. En particulier, le filtrage, la binarisation et la squelettisation sont effectués les uns à la suite des autres pour toute l'image. Même si ces traitements s'effectuent par régions, l'image entière est reconstituée avant recherche des minuties.

La présente invention vise à proposer un procédé et un système d'extraction de minuties dans des images numériques d'empreintes digitales qui évitent les mémorisations successives des images entières entre chaque étape de traitement.

L'invention vise également à proposer une solution qui réduit le nombre de calculs nécessaires pour l'extraction des minuties par rapport aux procédés classiques.

Pour atteindre ces objets et d'autres, la présente invention prévoit un procédé d'extraction d'une cartographie de minuties d'une image numérique comprenant les étapes suivantes :
diviser l'image en régions ;
définir une orientation de chaque région d'après la direction globale de sillons dans cette région ; et
successivement pour chaque région :
   filtrer de façon unidirectionnelle la portion d'image selon une direction perpendiculaire à l'orientation de la région ;
   repérer les barycentres des sillons d'après l'intensité des résultats du filtrage ;
   chaîner les barycentres d'après la direction globale des sillons de la région ; et
   interpréter les résultats du chaînage pour déterminer la présence de minuties de type terminaison ou de type branche.

Selon un mode de réalisation de la présente invention, le repérage des barycentres et le chaînage s'effectuent ligne après ligne dans l'orientation de la région concernée.

Selon un mode de réalisation de la présente invention, l'interprétation des résultats s'effectue ligne après ligne dans l'orientation de la région concernée.

Selon un mode de réalisation de la présente invention, les barycentres présents en limite d'une région sont chaînés avec ceux des régions voisines.

Selon un mode de réalisation de la présente invention, le repérage des barycentres des sillons s'effectue en centrant l'intensité en niveaux de gris résultant du filtrage par rapport à une valeur moyenne, éventuellement pondérée, de l'intensité dans la région concernée.

Selon un mode de réalisation de la présente invention, lors du repérage des barycentres, on repère également les bords du sillon encadrant chaque barycentre.

Selon un mode de réalisation de la présente invention, le chaînage des barycentres tient compte de l'allure des bords qui les encadrent.

L'invention prévoit également un système d'extraction de minuties d'une image numérique d'empreinte digitale.

Ces objets, caractéristiques et avantages, ainsi que d'autres de la présente invention seront exposés en détail dans la description suivante de modes de mise en oeuvre et de réalisation particuliers faite à titre non limitatif en relation avec les figures jointes parmi lesquelles :
la figure 1 décrite précédemment représente, de façon très schématique, un exemple de système du type auquel s'applique la présente invention ;
la figure 2 illustre, sous forme de blocs, un exemple classique de procédé d'extraction de minuties à partir d'une image numérique ;
la figure 3 illustre, sous forme de blocs, un mode de mise en oeuvre du procédé d'extraction de minuties selon la présente invention ;
les figures 4A à 4C illustrent, par des représentations d'une même région d'image, des étapes caractéristiques du procédé d'extraction de minuties selon un mode de réalisation préféré de la présente invention ;
les figures 5A et 5B illustrent une étape d'analyse de l'intensité des pixels selon un mode de réalisation préféré de l'invention ; et
la figure 6 illustre une étape de chaînage des barycentres des sillons repérés selon un mode de réalisation préféré de l'invention.

Pour des raisons de clarté, seules les étapes utiles à la compréhension de l'invention ont été représentées et seront décrites par la suite. En particulier, les traitements numériques considérés comme connus n'ont pas été détaillés.

La figure 3 illustre, sous forme de blocs, par une vue à rapprocher de celle de la figure 2, une mode de mise en oeuvre du procédé d'extraction de minuties selon la présente invention.

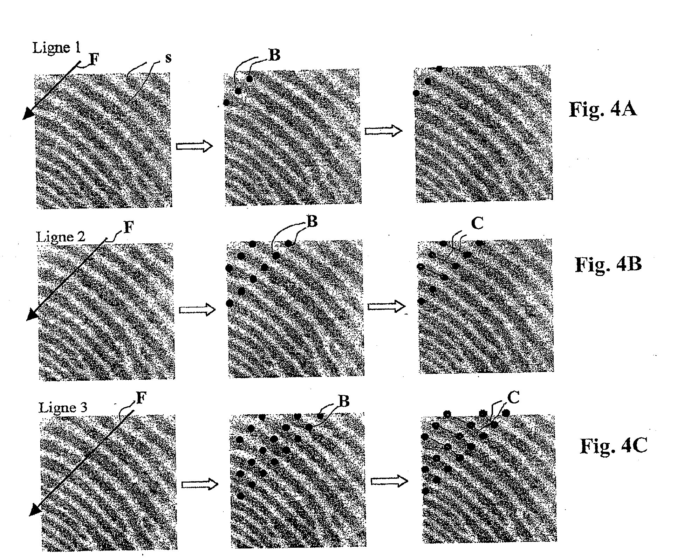

Comme précédemment, on part d'une image numérique d'empreinte digitale (bloc 20, IMAGE) prise par un système du type de celui représenté en figure 1. Toujours de façon classique, l'image est divisée (bloc 21, SB-DIV) en régions ou blocs auxquels sont appliqués des traitements d'image similaires. On commence par orienter les blocs, c'est-à-dire déterminer l'orientation globale des sillons dans chaque bloc (bloc 22, SB-ORIENT). Cette orientation s'effectue de façon classique par un examen de l'orientation des variations d'intensité lumineuse. Puis, on applique, de préférence en parallèle pour les différentes régions, des étapes caractéristiques de l'invention consistant à effectuer, ligne par ligne approximativement dans l'orientation des sillons, un filtrage monodimensionnel (bloc 23, 1D-FILTER), une recherche ou repérage (bloc 24, REPER) des barycentres des sillons, et un chaînage (bloc 25, CHAIN) des barycentres trouvés comme cela sera décrit ci-après en relation avec la figure 4. L'étape de chaînage 25 est, selon l'invention, suivie d'un prérepérage (bloc 26, PREDET) des minuties, c'est-à-dire, d'une détection des positions probables des minuties dans les différentes régions au fur et à mesure du balayage ligne par ligne de chaque région. Les étapes 23 à 26 ont été réunies dans un pointillé 28 et la sortie de l'étape 26 a été rebouclée sur l'entrée de l'étape 23 pour faire ressortir qu'elles s'effectuent ligne par ligne.

Selon un mode de réalisation préféré de l'invention, les régions sont ensuite rassemblées (bloc 27, REG-CHAIN) pour optimiser l'extraction des minuties et notamment confirmer ou infirmer le prérepérage.

Les figures 4A à 4C illustrent, par des représentations d'une même région d'image d'une empreinte digitale, un mode de mise en oeuvre d'une phase caractéristique de l'invention consistant à filtrer dans une direction (représentations de gauche dans l'orientation des figures 4A à 4C), à repérer les barycentres des sillons (représentations centrales) et à chaîner les barycentres (représentations de droite) en une seule passe, c'est-à-dire sans qu'il soit nécessaire de mémoriser l'ensemble de l'image après filtrage, puis l'ensemble de l'image après repérage, etc.

Le traitement opéré par l'invention consiste à traiter ligne après ligne la région d'image, le balayage s'effectuant dans la direction approximative principale des sillons, déterminée lors de l'orientation des régions ou blocs.

Les figures 4A à 4C représentent le traitement de trois lignes successives (Ligne 1, Ligne 2, Ligne 3).

On commence (figure 4A) par filtrer la première ligne (Ligne 1) dans la direction (symbolisée par des flèches F dans les représentations de gauche) perpendiculaire à l'orientation de la région, c'est-à-dire approximativement perpendiculairement à la direction globale des sillons s de la région concernée.

On pourra utiliser des filtres classiques monodimensionnels orientés. Par exemple, un filtre dit de normalisation ou un filtre de Gabor. Ce type de filtre, connu du traitement numérique d'image, est décrit, par exemple, dans la publication "One-Dimensional Gabor Filtering for Texture Edge Detection" de B Yegnanarayana, G. Pavan Kumar et Sukhendu Das, de la conférence Computer Vision Graphics and Image Processing de New-Dehli (Inde) des 21 au 23 décembre 1998.

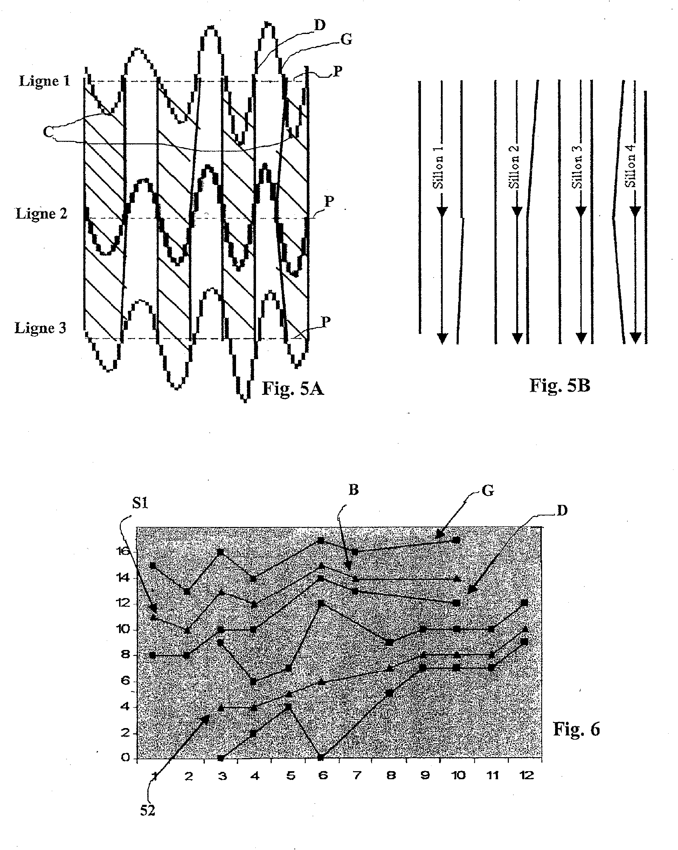

Suite au filtrage opéré, le repérage des barycentres B des sillons s s'effectue en analysant les variations d'intensité sur une ligne perpendiculaire à l'orientation des sillons. Cette analyse sera mieux comprise à la lecture de la description des figures 5A et 5B qui sera faite par la suite.

Une fois les barycentres des sillons repérés, comme il s'agit de la première ligne de la région traitée, on passe au filtrage de la ligne suivante (figure 4B). En effet, comme le traitement est orienté dans la direction des sillons, il ne sert à rien de rechercher un chaînage, les points (barycentres) trouvés lors du repérage étant forcément, au moins pour la région considérée, des départs de sillons.

Une fois la ligne suivante (Ligne 2) filtrée, on effectue le long de cette ligne, le repérage des barycentres B, là encore par analyse de l'intensité lumineuse. Puis, comme l'illustre la représentation de droite de la figure 4B, on recherche les chaînages C éventuels entre les points de la deuxième ligne et les points de la première ligne. Tous les points de la première ligne ne constituent pas des suites de sillons ayant des points sur la première ligne. Cela provient de la forme de la région traitée (dans cet exemple, carrée).

Le chaînage s'effectue selon l'invention en examinant, non seulement les barycentres, mais également les bords des sillons dont les positions respectives sont évaluées lors du repérage comme cela ressortira de la description de la figure 5. Un exemple de chaînage sera détaillé par la suite en relation avec la figure 6.

Comme l'illustre la figure 4C, on passe ensuite à la ligne suivante (Ligne 3) à laquelle on applique les étapes de filtrage, repérage et chaînage, et ainsi de suite pour toutes les lignes de la région. D'une ligne à la suivante, on garde (mémorise) au moins les informations relatives aux barycentres et bords des sillons pour être en mesure d'effectuer le chaînage.

Selon l'invention, la détermination de la position du barycentre d'un sillon associé au chaînage au fur et à mesure permet d'obtenir directement les coordonnées de certaines minuties dès le traitement région par région. En effet, si un point ne peut pas être chaîné à un autre de la région et que sa position ne correspond pas, d'après la ligne à laquelle il appartient, à un bord de la région, on est en présence d'une terminaison de sillon dont on peut enregistrer les coordonnées. Par ailleurs, lorsque deux chaînes se rejoignent, c'est-à-dire lorsque deux barycentres appartenant à deux chaînes distinctes sont très proches l'un de l'autre (par exemple distants de moins d'un nombre de pixels prédéterminé fonction de la définition de l'image), on peut considérer que l'on est en présence d'une branche dont on peut alors enregistrer les coordonnées.

Les seuls points qui ne sont pas examinés du point de vue de l'existence d'une minutie sont les points situés en périphérie de la région. On ne peut en effet pas savoir à ce stade si le sillon se poursuit sur une région suivante ou non.

Comme il ressort de la description qui précède, il n'est pas nécessaire de reconstituer (donc de mémoriser) toute l'image issue du filtrage avant d'y appliquer les traitements ultérieurs. Il n'est d'ailleurs pas non plus nécessaire de reconstituer l'image après la détermination des barycentres.

Un avantage de l'invention est qu'elle économise au moins deux mémorisations complètes d'image par rapport aux procédés classiques (celle issue de filtrage et celle issue de la binarisation). De plus, même après chaînage, on peut se passer d'une mémorisation complète et se contenter, outre les coordonnées des minuties détectées, de mémoriser les vecteurs de sillons associés aux barycentres de la périphérie de la région.

Le chaînage prévu par l'invention permet de se contenter, en amont, de filtrer dans une seule direction. En effet, l'information de liens entre les barycentres que ne donne plus le filtrage est ici obtenue par le chaînage. Toutefois, cela apporte non seulement une simplification du filtrage, mais également une prédétection des minuties au fur et à mesure du traitement. On évite ainsi une étape de recherche par comparaison bit par bit comme dans les procédés classiques.

De préférence, les différentes régions sont traitées en parallèles afin d'économiser du temps de traitement. On effectuera un compromis entre cette économie de temps de traitement et la puissance de calcul nécessaire pour le traitement en parallèle en fonction des applications.

Une fois toutes les régions traitées, on dispose déjà des coordonnées des minuties de type branche ainsi que des coordonnées probables des minuties de type terminaison. Idéalement, les minuties de type terminaison ne sont pas sûres car elles peuvent masquer une discontinuité de sillons à cheval sur deux régions.

Selon un mode de mise en oeuvre simplifié, le traitement de recherche des minuties s'arrête là. En effet, on peut considérer que les coordonnées obtenues sont valables, au moins pour les minuties de type branche. Ainsi, on peut fixer un seuil (par exemple, compris entre 20 et 50) de minuties de type branche détectées et ne tenir compte par la suite que des seules minuties de type branche pour effectuer la comparaison d'empreintes.

Selon un mode de réalisation préféré de l'invention, les différentes cartographies de barycentres sont chaînées les unes aux autres d'après leurs coordonnées respectives dans l'image entière. On détecte ainsi les éventuelles interruptions de sillons liées aux imperfections de prise d'image et de numérisation dont il convient de ne pas tenir compte. Le cas échéant, on élimine également les minuties trop proches les unes des autres. Ce dernier point reste optionnel car, dans les techniques classiques, l'objet de ce tri est d'éliminer les interruptions de sillons qui, selon l'invention, le sont déjà lors du chaînage d'une région à une autre.

Les figures 5A et 5B illustrent un mode de mise en oeuvre préféré des étapes de recherche des barycentres et de chaînage selon l'invention. La figure 5A représente le résultat du filtrage unidirectionnel opéré à l'étape 23 pour trois lignes successives (Ligne 1, Ligne 2, Ligne 3) dans la direction globale des sillons d'une même région du type de celle illustrée par les figures 4A à 4C, et illustre la détermination des barycentres (étape 24). La figure 5B illustre le résultat du chaînage (étape 25) d'après cette détermination. En figure 5A, on a représenté les intensités respectives du signal de sortie du filtre (par exemple de Gabor) les unes au-dessus des autres pour les trois lignes successives. En d'autres termes, la verticale des figures 5A et 5B correspond à la direction perpendiculaire à celle des flèches F des figures 4A à 4C, donc à l'orientation du filtre de Gabor.

Pour analyser l'intensité du signal de sortie du filtre, on centre ce signal, par exemple, par rapport à la valeur moyenne (pointillés p sur les représentations des lignes 1, 2 et 3 en figure 5A) du signal. En fait, cette valeur peut correspondre à l'intensité lumineuse moyenne de la région, éventuellement pondérée empiriquement. Elle peut être déterminée dès le début du filtrage et être affinée au fur et à mesure du balayage en ligne.

Par rapport à cette valeur moyenne, les vallées présentent des intensités lumineuses supérieures et les fonds des sillons des intensités lumineuses inférieures (ou l'inverse selon que l'image est positive ou négative). En fait, le signal oscille autour de la valeur moyenne p au rythme de la traversée des sillons. On se souviendra que le balayage de la région est orienté pour que la direction F du filtre soit approximativement perpendiculaire à la direction des sillons dans la région concernée. Les passages par zéro (centrage sur la valeur moyenne) du signal qui encadrent une valeur négative correspondent aux bords (droit D et gauche G) du sillon correspondant. De préférence, on définit une plage d'incertitude autour de la valeur moyenne à l'intérieur de laquelle on ignore les crêtes du signal pour éviter la prise en compte d'artefacts.

La représentation de la figure 5A fait apparaître quatre pics négatifs, donc quatre sillons. Ces pics se retrouvent dans les lignes suivantes. Les lignes approximativement verticales en traits pleins joignent les bords G et D respectifs des sillons (les passages par zéro des signaux). Les barycentres B des sillons sur les différentes lignes correspondent au milieu de l'écart entre les deux passages par zéro qui encadrent les crêtes négatives des signaux.

En figure 5B, seuls les bords des sillons et ces derniers ont été illustrés. Cela correspond au résultat du chaînage opéré à l'étape 25. Ce chaînage sera mieux compris à la lecture de la description suivante en relation avec la figure 6.

La figure 6 représente un exemple de chaînage des barycentres B (illustrés par des triangles) des sillons ainsi que des bords droits D et gauches G (illustrés par des carrés) des sillons. Pour simplifier, la représentation de la figure 6 a été faite en supposant une orientation horizontale des sillons de la région concernée. Comme pour les figures 4 et 5, on se souviendra que l'analyse s'effectue ligne après ligne, c'est-à-dire horizontalement dans la représentation de la figure 6. Les unités de l'axe horizontal correspondent au numéro de ligne (donc au rang du pixel traité dans la région). Les unités de l'axe vertical correspondent au rang du pixel traité le long d'une ligne.

Du résultat de l'étape précédente d'analyse de l'intensité en sortie de filtrage, on connaît pour la ligne courante les positions (coordonnées) des barycentres et des bords des sillons. Pour relier un barycentre de la ligne courante à un barycentre de la ligne précédente, on examine les bords du sillon qui en résulteraient, entre la ligne courante et précédente. Si ces bords suivent approximativement la même direction que les barycentres, on considère qu'il s'agit bien d'un même sillon et on chaîne (on relie) les barycentres. En pratique, on enregistre par exemple les coordonnées des barycentres associées à un numéro d'ordre de sillon donné séquentiellement au cours du traitement. La notion de proximité (en nombre de pixels) entre les allures suivies par les bords et les barycentres dépend notamment de la définition de l'image, et des dimensions des régions qui conditionnent la probabilité de "virages" dans les sillons au sein d'une même région. Comme la région est orientée, on connaît déjà l'orientation approximative principale des sillons. On peut donc apparier correctement les barycentres d'une ligne à la suivante et ne pas "sauter" d'un sillon au sillon voisin en changeant de ligne. Les seuils qui en découlent pour un traitement numérique sont à la portée de l'homme du métier. Si un barycentre courant ne peut être lié à un barycentre précédent, on considère qu'il constitue le point de départ d'une nouvelle chaîne (donc potentiellement une minutie de type terminaison). De façon similaire, on considère qu'un barycentre de la ligne précédente qui n'a pas trouvé de successeur dans la ligne courante constitue, au moins pour la région considérée, une fin de chaîne (donc potentiellement une minutie de type terminaison).

Dans la représentation de la figure 6, on suppose qu'un sillon S1 démarre dès la première ligne et se termine à la ligne 10, tandis qu'un deuxième sillon S2 démarre à la ligne 3 et se poursuit jusqu'au moins la fin de la région (supposée ici pour simplifier de 12 lignes).

On voit donc que des terminaisons sont détectées dès le balayage des régions. On notera que plus ces terminaisons sont centrées dans une région (en supposant bien sûr les régions de tailles suffisantes en fonction de la définition de l'image), moins il y a de risque qu'il s'agisse d'une interruption accidentelle. On peut donc, le cas échéant, valider dès l'examen ligne à ligne, des minuties de type terminaison. De façon similaire, si un sillon démarre sur un autre (ou au voisinage d'un autre avec un seuil d'écart adapté à la définition de l'image), on considère alors qu'il s'agit d'une minutie de type branche, sans qu'il soit nécessaire d'attendre le chaînage des différentes régions.

On notera que les coordonnées des minuties déterminées dans cette phase ligne à ligne sont parfaitement identifiées dans l'image entière par leurs coordonnées. Cela est donc compatible avec un procédé de comparaison d'empreintes digitales.

Le chaînage des régions conformément au mode de réalisation préféré de l'invention apporte une meilleure détermination aux interfaces entre les régions. En particulier, il se peut qu'une terminaison détectée au bord d'une région corresponde en fait au départ d'une branche depuis un autre sillon apparaissant sur une région voisine. Dans le cas d'un chaînage des régions, on se contentera préférentiellement de mémoriser les vecteurs des sillons aux bords des différentes régions afin de pouvoir effectuer les raccordements nécessaires. Il n'est toutefois pas indispensable de mémoriser tous les points détectés à l'intérieur des régions. Une mémorisation des minuties prédétectées suffit.

En variante, on pourra plutôt que d'effectuer un chaînage des régions, prévoir un chevauchement des régions lors du découpage de l'image. Le chaînage est alors automatique par la détermination de minuties ayant les mêmes coordonnées dans l'image entière.

Un avantage de la présente invention est qu'elle permet de s'affranchir des problèmes liés à la discontinuité des sillons en raison d'imprécisions de numérisation de l'empreinte.

Un autre avantage de l'invention est qu'elle simplifie considérablement le filtrage et les calculs de détermination. En particulier, le fait d'éviter un examen systématique de toute l'image reconstituée gagne un temps considérable.

Bien entendu, la présente invention est susceptible de diverses variantes et modifications qui apparaîtront à l'homme de l'art. En particulier, la programmation matérielle ou logicielle d'outils classiques (machines d'état en logique câblée ou microprocesseurs) pour la mise en oeuvre de l'invention est à la portée de l'homme du métier à partir des indications fonctionnelles données ci-dessus. De plus, le choix du filtre (par exemple, Gabor ou normalisation) dépend de l'application et est à la portée de l'homme du métier. Dans le cas d'un filtre de normalisation, les étapes de filtrage 23 et de repérage 24 des barycentres peuvent être confondues.

## Revendications

1. Procédé d'extraction d'une cartographie de minuties d'une image numérique comprenant les étapes suivantes :
diviser (21) l'image en régions ;
définir (22) une orientation de chaque région d'après la direction globale de sillons (s) dans cette région ; et
successivement pour chaque région :
filtrer (23) de façon unidirectionnelle la portion d'image selon une direction (F) perpendiculaire à l'orientation de la région ;
repérer (24) les barycentres (B) des sillons d'après l'intensité des résultats du filtrage ;
chaîner (25) les barycentres d'après la direction globale des sillons de la région ; et
interpréter (26) les résultats du chaînage pour déterminer la présence de minuties de type terminaison ou de type branche.

2. Procédé selon la revendication 1, dans lequel le filtrage (23), le repérage (24) des barycentres (B) et le chaînage (25) s'effectuent ligne après ligne dans l'orientation de la région concernée.

3. Procédé selon la revendication 2, dans lequel l'interprétation (26) des résultats s'effectue ligne après ligne dans l'orientation de la région concernée.

4. Procédé selon l'une quelconque des revendications 1 à 3, dans lequel les barycentres (B) présents en limite d'une région sont chaînés (27) avec ceux des régions voisines.

5. Procédé selon l'une quelconque des revendications 1 à 4, dans lequel le repérage (24) des barycentres (B) des sillons (s) s'effectue en centrant l'intensité en niveaux de gris résultant du filtrage par rapport à une valeur moyenne (p), éventuellement pondérée, de l'intensité dans la région concernée.

6. Procédé selon l'une quelconque des revendications 1 à 5, dans lequel, lors du repérage (24) des barycentres (B), on repère également les bords (G, D) du sillon (s) encadrant chaque barycentre.

7. Procédé selon la revendication 6, dans lequel le chaînage (25) des barycentres (B) tient compte de l'allure des bords (G, D) qui les encadrent.

8. Système d'extraction de minuties d'une image numérique d'empreinte digitale, **caractérisé en ce qu'**il comprend des moyens pour la mise en oeuvre du procédé selon l'une quelconque des revendications 1 à 7.
